# EUROPEAN PATENT APPLICATION

(11) **EP 3 128 576 A1**
(43) Date of publication of application: **08.02.2017**
(21) Application number: 15774093.7
(22) Date of filing: 20.03.2015
(51) Int. Cl.: H01M 2/10, H01M 10/617, H01M 10/6554

(54) **STORAGE BATTERY UNIT AND STORAGE BATTERY DEVICE PROVIDED WITH SAME**

(30) Priority: 31.03.2014 JP 2014074467
(71) Applicant: NEC Corporation, Tokyo 108-8001 (JP)
(72) Inventor: YAMADA, Masanori, Tokyo 108-8001 (JP); HIGUCHI, Isao, Tokyo 108-8001 (JP); SUZUKI, Toru, Tokyo 108-8001 (JP)
(74) Representative: Vossius & Partner Patentanwälte Rechtsanwälte mbB
(86) International application number: PCT/JP2015/058522
(87) International publication number: WO 2015/151869

(57) **Abstract**

This storage battery unit (10), comprising: a battery stack (30) in which a plurality of battery modules (20) are stacked; and a housing (50) for accommodating the battery stack; wherein the housing (50) comprises a battery cover (51) for covering at least a part of the battery stack, the battery cover including a seamless cup portion (51 a, 51 b), and wherein the battery cover (51) is in thermally contact with the battery stack (30).

## Description

### TECHNICAL FIELD

The present invention relates to a storage battery and the like including a plurality of battery modules and a housing for accommodating the modules. The present invention particularly relates to a storage battery and the like, which is easy to assemble and advantageous for reducing a manufacturing cost.

### BACKGROUND ART

Storage battery apparatus has a plurality of rechargeable battery modules, and discharges electricity charged in the battery module as necessary. With respect to use of such storage battery apparatus, for example, it discharges electricity in daytime charged during night time at a cheaper fee, or, it discharges electricity in night time charged by a solar power during daytime, for example. Further, storage battery apparatus may also be used as an emergency power supply during power outages. Such a storage battery apparatuses are conventionally often installed in factories, offices, and commercial facilities. In recent years, such a storage battery apparatus are installed in general houses and the like.

There are various configuration of housings (also referred to as "casing") for containing battery module in storage battery apparatus. Patent Document 1, for example, discloses a storage battery apparatus that has a housing with an upper opening and a bottom, a plurality of batteries disposed therein, and a plate-like cover attached to the upper surface of the housing. The document further discloses that the housing with a bottom can be formed by using methods such as extrusion, casting, pressing, joining by welding, assembly by fasteners.

### PRIOR ART DOCUMENTS

Patent Document 1: Japanese Patent Laid-Open No.2013-140790

### SUMMARY OF INVENTION

### TECHNICAL PROBLEM

Patent document 1 discloses, by way of example, the housing having a bottom that is manufactured by pressing single metal plate, but its mechanism for holding each batteries are special. Specifically, it has a compressible insulator between the plurality of batteries and the cover for covering the batteries. Each battery is held with the insulator compressed in a state that the cover is attached.

When manufacturing storage battery device, its configuration would significantly depend for example on whether it is for vehicles or for stationary, or, on the number and size of batteries to be accommodated. An accommodating efficiency of the battery arrangement in the cited document 1 is not good, since batteries are disposed being spaced from one another. Furthermore, there is room for improvement in terms of assembling workability.

The objective of the present invention is to provide a storage battery and the like, which is easy to assemble and advantageous for reducing a manufacturing cost.

### MEANS FOR SOLVING THE PROBLEMS

Storage battery unit according to an embodiment of the present invention for achieving the above objective is as follows:
A storage battery unit, comprising:
   a battery stack in which a plurality of battery modules are stacked; and
   a housing for accommodating the battery stack;
   wherein the housing comprises a battery cover for covering at least a part of the battery stack, the battery cover having a seamless cup portion, and wherein the battery cover is in thermally contact with the battery stack.

According to the above configuration, since battery modules are stacked, it is easy to assemble compared with the battery arrangement as shown in Patent Document 1. Furthermore, since the battery cover having the seamless cup portion is preferable to formed by press working (for example, deep drawing press working), it is advantageous for reducing a manufacturing cost.

### (TERMINOLOGY)

"BATTERY CELL" in this specification refers to an electrochemical cell such as a film-covered battery that is used as one unit for battery
"BATTERY MODULE" refers to a module for outputting a predetermined power that has one or more battery cells and a case for accommodating it.

"STORAGE BATTERY UNIT" refers to a unit, which has a plurality of the above-mentioned battery modules.

"STORAGE BATTERY APPRATUS" refers to a whole apparatus, which includes at least one storage battery units (battery part), and its control circuit and the like.

"SHEET-LIKE HEAT CONDUCTOR" refers not only to a heat conductor preformed in sheet-shape, but to a sheet heat conductor formed by disposing material with a fluidity between some members and solidifying the material. "SHEET-LIKE" includes both a sheet with flat surface and a sheet with convexo-concave surface.

"SEALED" - in a description that housing is accommodated in sealed manner, the term "SEALED" refers to a seal which ensures self-extinguishing of the battery cell if the battery cell is ignited. Therefore, it includes both being completely sealed and substantially sealed.

### Effect of the invention

According to the present invention, a storage battery devices and the like can be provided, which is easy to assemble and advantageous for reducing a manufacturing cost.

### BRIEF DESCRIPTION OF DRAWINGS

Fig. 1 is a perspective view of a disassembled storage battery unit according to one embodiment of the present invention.
Fig. 2 is a perspective view of an example storage battery apparatus.
Fig. 3 is a perspective view of an appearance example the storage battery apparatus.
Fig. 4 is a perspective view for explaining a battery module and a heat conductive plate and the like.
Fig. 5 is a cross-sectional view of the storage battery unit.
Fig. 6 is an enlarged sectional view showing a seal member disposed between the flange portion s of the battery covers and a peripheral structure thereof.
Fig. 7 is a plan view of the battery cover.
Fig. 8 is a sectional view showing the vicinity of the side surface of battery module in assembled state.
Fig. 9 is a schematic cross-sectional view of storage battery units stacked in vertical direction.
Fig. 10 is a perspective view of an example of frames.
Fig. 11 is a view for explaining a mounted state of the storage battery unit.
Fig. 12 is a perspective view of a disassembled storage battery unit according to the other embodiment.
Fig. 13 is a sectional view schematically showing a configuration of the storage battery unit of Fig. 12.
Fig. 14 is a sectional view schematically showing an example of a storage battery unit having heat conductive sheet.

### DESCRIPTION OF EMBODIMENT

Embodiments of the present invention will be described below with reference to drawings. Configuration represented in the drawings is merely embodiments of the present invention. The present inventions are not limited to the specific configurations but can be suitably changed without departing from the scope of the present invention. In the following description, inventions according to some aspects of the present invention are described in separate embodiments; however, technical matters disclosed in each embodiments may be appropriately combined.

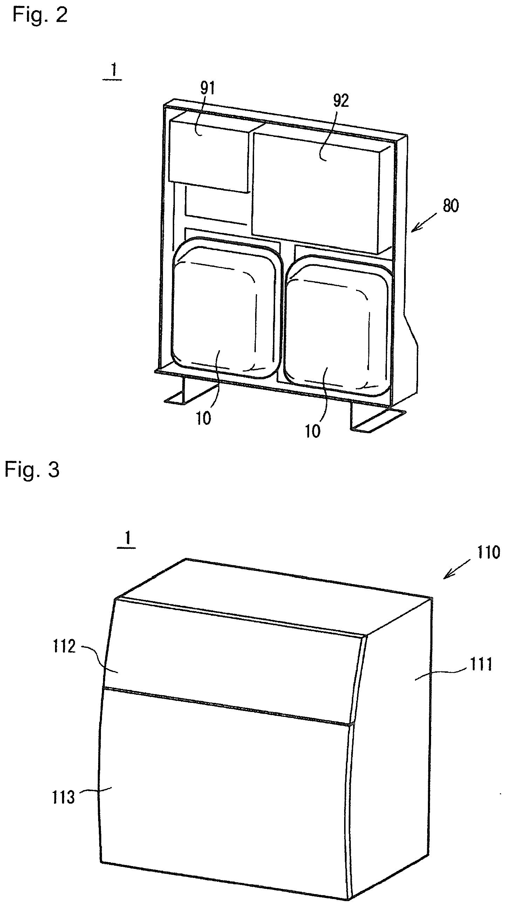

A storage battery apparatus 1 of the present embodiment as illustrated in Fig. 2 is a stationary type power supply apparatus, which has two storage battery units 10, a junction box 91, a PCS (Power Conditioner System) unit 92, and a frame 80 for holding them. Appearance (housing 110) of the storage battery device 1 is shown in Fig. 3, for example. Detailed description for the storage battery apparatus 1 and the housing 110 will be described later.

### (Storage battery units)

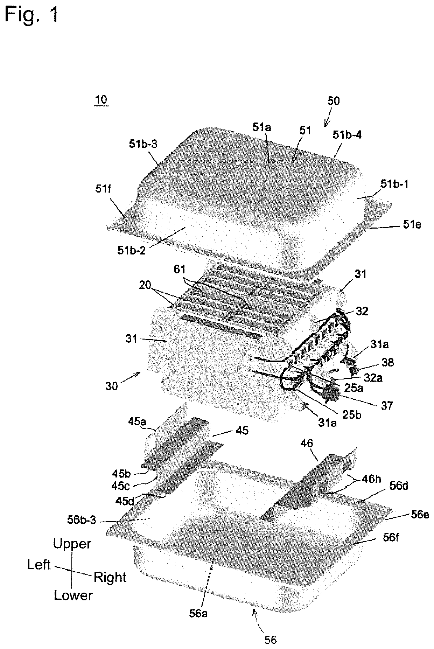

Storage battery unit 10 has a battery stack 30 in which a plurality of battery modules 20 are stacked and a sealed housing 50 for housing the battery stack 30 as shown in Fig. 1. The sealed housing 50 consists of a pair of battery covers 51, 56 disposed so as to face each other in this example.

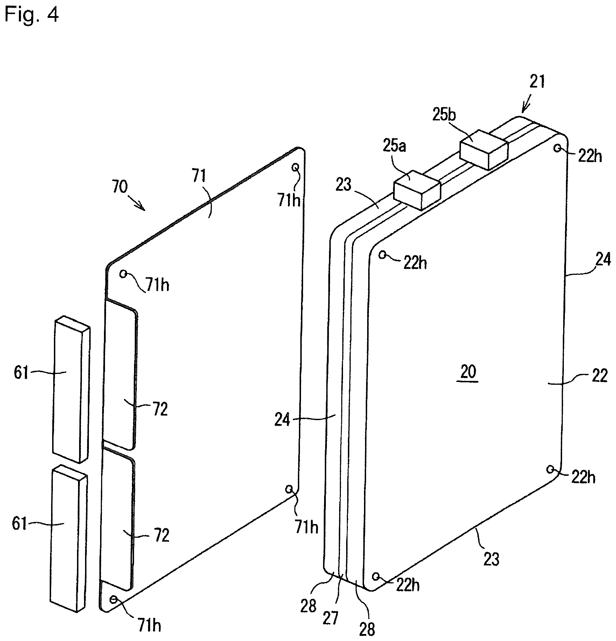

With respect to the battery stack 30, in this example, eight battery modules 20 are electrically connected to each other in series. It is noted that the number of the battery modules 20 is not limited to eight, but may be seven or less or nine or more. The battery module 20 may be formed in a flat shape as a whole as shown in Fig. 4.

Specifically, the battery module 20 has a thin rectangular parallelepiped housing case 21, in which one or more electrochemical cells (not shown) are disposed. Here, outer surfaces of the housing case 21 (in other words, outer surfaces of the battery module 20) are defined. As shown in Fig. 4, reference numeral 22 indicates a main surface (indicating only one), reference numeral 23 indicates a short a side surface, and reference numeral 24 indicates a long side surface. A positive electrode terminal and a negative electrode terminal 25a, 25b are disposed on the upper side surface 23. Terminals 25a, 25b protrude from the side surface 23.

Various materials can be selected for the housing case 21. For example, a plastic case 27 and metal covers 28, 28 attached to the surface may be used. Metal cover 28 can cover almost all of the main surface 22 and parts of the side surfaces 23, 24. By attaching such covers 28 to the main surfaces 22, 22 respectively, almost all the battery module 20 can be covered with the metal cover 28. Alternatively, a housing case made of plastic or metal as a whole may be used.

From the point of view of heat dissipation of the battery module 20, it is preferable for internal heat to be efficiently dissipated to the outside of the battery module. The above configuration allows heat to be transmitted effectively, via metal covers 28, to a heat dissipation member disposed outside.

Referring again to Fig. 4, corners of the housing case 21 (a connecting portion between the side surfaces 23, 24) are rounded shape. Through holes 22h penetrating the case in its thickness direction are formed near each corners of the housing case 21. The battery module 20 are fixed each other by tightening a fixing rod (not shown) inserted within the through hole 22h. It is noted that rounded corner of the housing case can be omitted. With respect to through holes 22h, one or two or more through holes may be formed at any position.

Electrochemical cells disposed in a housing case 21 may be a film-covered battery as a lithium ion secondary battery. Film-covered battery generally has a battery element in which positive electrodes and negative electrodes are alternately stacked via separators. The battery element is sealed together with an electrolyte in the exterior film such as a laminate film. Voltage of a electrochemical cell may be within a range of 3.0V to 5.0V or 3.0V to 4.0V.

Battery modules in the housing case 21 may be connected all in series, or in a combination of parallel and series. Specific arrangement is not limited to, but for example, two to four battery cells may be housed in a case in a stacked manner in its thickness direction. More particularly, in view of a theoretical affinity for a protection device, power-of-two (e.g. two or four) electrochemical cells may be disposed.

It is noted that a storage battery for home use has battery cells connected in series, since it is necessary to output the AC power similar to a single-phase three-wire AC200V supplied to homes from a power company. Since laminate-type lithium-ion batteries (film-covered batteries) are thin and lightweight, it is advantageous for multi-serialization and lithium-ion batteries are utilized storage battery device for home use. To output a single-phase three-wire AC200V, it is preferable to obtain almost DC 200V by connecting batteries in series inside a device in order to maximize an efficiency in a power conditioner (hereinafter, PCS). Therefore, for batteries having an average voltage 4V, a configuration in which a single module with 64 battery units connected in series or two modules with 32 storage battery units connected in series are disposed. When using 4 series of battery modules, may be configured to connect the module to 16 or eight modules connected is series inside a battery area may be used.

### (Battery stack)

A battery stack 30 is a sub-assembly in which pluralities of battery modules 20 are stacked. In this example, eight battery modules 20 are aligned (stacked) in the thickness direction. End plates 31, 31 are disposed at both ends of the battery stack. A partition plate 32 is disposed at an intermediate portion. These plates may be omitted in some cases.

The end plate 31 and the partition plate 32 may be a sheet metal, for example. The end plate 31 and the partition plate 32, in this example, have roles of supporting the battery module 20 and fixing the battery module 20 to supporting members 45, 46 described later. For the latter role, each of the end plate 31 and the partition plate 32 has extending portions 31 a, 32a in a part thereof. Fixing portions are provided at a tip of the extending portions 31 a, 32a where a hole for a fixing screw to be inserted is formed, and this portion is configured to be fixed to the supporting member 46 described later.

Although detailed illustration is omitted, a fixing portion is also provided at tip of the other side (left in Fig. 1) of extending portions 31 a, 32a where a hole for a fixing screw to be inserted is formed, and this portion is configured to be fixed to the supporting member 45 described later.

Size of the end plate 31 and the partition plate 32 may be, for example, the same or substantially the same as the battery module 20, or may be slightly larger than the battery modules as shown in Fig. 1. Although detailed illustration is omitted, the rods (four, for example) for securing all the battery modules 20 may be configured to penetrate, end plates 31, four battery modules 20, partition plate 32, other four battery modules 20, and the other end plate 31 in order. Securing is carried out by tightening the nut to the tip of the rod.

Electrical connection of the battery modules 20 in the battery stack 30 may be a serial connection or may be a combination of parallel and series connections. For electrical connections, a bus bar (not shown), a cable or the like can be used.

The battery stack 30 may also have one or more sensors (not shown) for measuring temperature of the battery module 20.

The battery stack 30 of Fig. 1 has a power connection portion 37 for outputting power and a signal connection portion 38 for outputting a detected signal of temperature sensor or the like to the outside. In order to provide electrical connection with the connecting portions 37 and 38, openings may be formed on the battery cover 56 to which connectors are attached. Waterproof connectors may be used.

### (Battery cover)

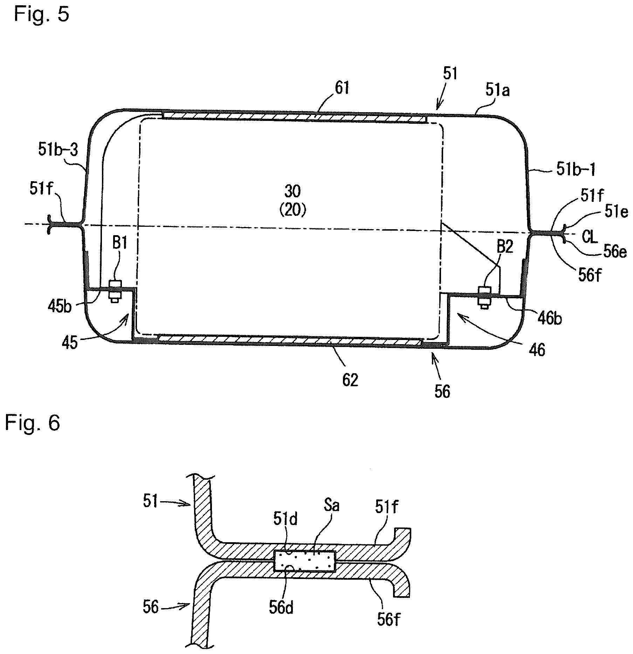

Battery covers 51, 56 for constituting a sealed housing 50 are described in detail. As shown in Fig.1 and Fig. 5, entire shape of battery covers 51, 56 may be identical or symmetrical, but detailed shape can be slightly different from the others. Explaining the battery cover 51 by way of example, it may be made by pressing a metal plate (deep drawing, for example). The battery cover 51 has a bathtub-like shape as a whole, in other words, a shape having a seamlessly formed cup portion with a certain depth. In other words, it is preferable that at least the cup portion is formed by the same material and single member. It is noted that this does not mean to exclude disposing a member for pulling a cable on a part of the cup portion, or, disposing a certain member separate from the cup portion for connecting other component or the like.

Although it is depicted such that a cup portion protrudes upward, the battery cover 51 has a cover surface 51a corresponding to a bottom surface of the cup portion, four side surfaces 51b-1 to 51b-4 (hereinafter, simply referred to as "side surface 51b") extending from the periphery of the cover surface 51 a , and a flange portion 51f formed at the end of the side surfaces 51 b.

Corners between the cover surface 51a and the side surface 51b and corners between adjacent side surfaces 51b are gently rounded. Curvature radius of the corner may be 25 mm or more (by way of example, the thickness of material is 1.5 mm or more and 2.5 mm or less), more specifically 30 mm or more in order to appropriately form such a shape.

Material of the battery covers 51, 56 may be, for example, rolled steel plate, stainless steel plate or the like. The thickness of the material of the battery covers 51, 56, depending on a required module size or the like may be for example in range of 1.2mm to 2.0mm.

The cover surface 51 a may be a flat surface not particularly processed, or a concavo-convex surface. Such a concavo-convex surface can be designed in terms of several viewpoints, however, it can be designed in accordance with improving rigidity and heat dissipating property. The side surfaces 51b may be substantially vertical with respect to the cover surface 51a, or tapered at 1 to 3 degrees.

The flange portion 51f is shaped in flat to extend within a virtual reference plane (not shown) and its overall outer shape is a square. By fixing the flange portion 51f of the battery cover 51 to the flange portion 56f of the other battery cover 56, a closed space is formed between the covers 51, 56. Fixing screw, welding, riveting or the like can be used for securing the flange portions 51f, 56f. A plurality of through holes (not shown) for fixing screws or the like may be formed on the flange portions 51 f, 56f.

Press working or a secondary processing such as drilling may be used for forming the through holes.

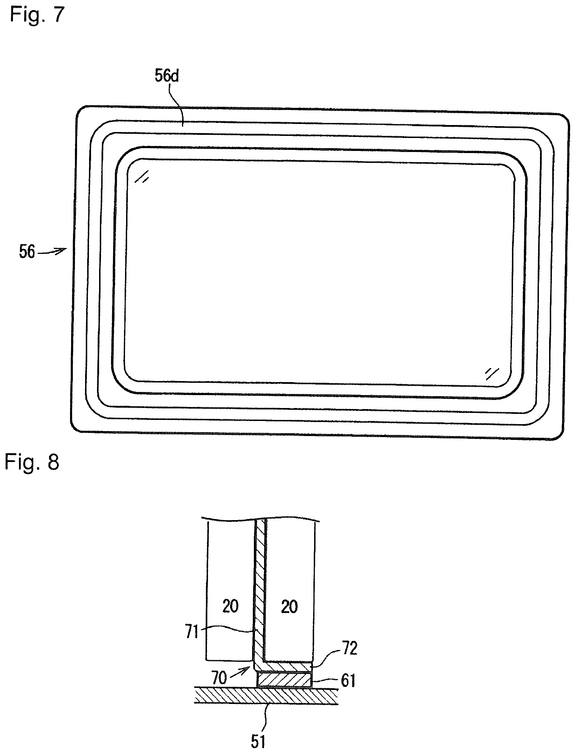

A closed housing 50 in this embodiment can yield the following effects. Specifically, even if a battery cell ignites due to a certain reason, it is possible to extinguish it automatically inside of the sealed housing 50. Thus, it is possible to prevent the ignition in the storage battery apparatus 1 and to prevent fire from spreading. To ensure sufficient sealing property, the flange portions 51f, 56f of the battery covers 51, 56 may have grooves 51d, 56d with predetermined depth as shown in FIG. 6, and a seal member Sa may be disposed in a space formed therebetween. The grooves 51d, 56d (only a groove 56d is shown) are preferably formed along entire periphery of the flange portion as shown in Fig. 7. Outline shape of the groove (not shown) may be square. Although only one groove is formed in this example, two grooves inside and outside may be formed.

Dimensions of the grooves 51d, 56d may be variously modified. For example, provided that the thickness of the flange portions 51f, 56f is 1.6 mm, depth may be in the range of 0.8 mm to 1.0 mm (hence, height of inner space is about 1.6 mm to 2.0 mm), and width may be in the range of 6 mm to 12 mm. Both shape of the flange portions 51f, 56f may be identical. Alternatively, the depth and/or the width may be different from the other. A configuration may be used in which one flange portion has a groove, while the other does not. Pressing is preferable for forming grooves in terms of workability and reducing manufacturing cost, however the present invention is not limited thereto, other processing can be used.

The sealing member Sa is an elastic member for example. The sealing member Sa is compressed between the flange portions 51f, 56f to ensure airtightness. It might be difficult for pressing working to ensure flatness of the flange portions 51f, 56f, however, good airtightness can be achieved and self-extinguishing property is obtained by using the elastic sealing member Sa as shown in the present embodiment, even if the flange portions 51f, 56f do not have sufficient flatness.

The sealing member Sa may be formed in advance in a shape of the grooves 51d, 56d, but not limited thereto. For example, foamable material may be used. By way of example, after disposing the material with some flowabirity along the groove, then it foams to thereby fill the space between the grooves 51d, 56d. By way of example, sealing member, which is to be about 4 mm after foamed, may be compressed in a space of 2 mm height (in other words, a compression ratio of the foamed sealing member is about 50%).

Alternatively, sealing members such as a sealing ring or a gasket may be used. Depending on a type or shape of the sealing members, sealing member is not necessarily disposed in the groove. A sealing member can be interposed between flange portions 51f, 56f with no groove. It is noted that a housing 50 may have no sealing properties if the self-extinguishing property is not required.

### (Fixing of battery stack)

Referring to Figs. 1 and Figs.5, fixing of the battery stack 30 in the sealed housing 50 will be described. In the present embodiment, the battery stack 30 is configured to be secured to the closed housing 50 via supporting members 45, 46 as shown in Fig. 1.

Each of the supporting members 45, 46 is a metal plate bent in a stepped shape. By way of example, the supporting member 45 will be described. It has a fixing surface 45a extending along the side surface 56b-3 of the battery cover 56, a mounting surface 45b in which a plurality of screw holes are formed and bending from the lower end of the fixing surface 45a, a connecting surface 45c bending from the end portion of the mounting surface 45b, and a fixing surface 45d bending from the lower end of the connection surface 45c and extending along the cover bottom surface. Similarly, the other supporting member 46 has a stepped shape, but is different with respect to the number and position of the opening 45h and the like. The connecting portions 37 and 38 of the battery stack 30 described above are configured to be inserted into the openings 45h.

The supporting members 45, 46 may be welded to inner surface of the battery cover 56. Fig. 5 schematically shows a fixed state. The battery stack 30 is secured to the housing 50 by fixing a portion of the battery stack 30 to the supporting member 45 with screws B1 and by fixing the other portion to the other support member 46 with screws B2.

According to the present embodiment using the supporting member 45, 46, a fixing position (in other words, position of the mounting surfaces 45b, 46b shown in Fig. 5) of the battery stack 30 is closer to a centerline CL of the housing 50. This yields the following result.

The storage battery unit 10 is supposed not only in lateral direction as shown in Fig. 5 but also in a vertical direction (in other words, orientation in which the battery covers 51, 56 are aligned in the lateral rather than vertical). In that case, if a fixing positon of the battery stack is near a bottom surface of the cover member, a battery stack 30 would be supported in a cantilever-like state. This might affect a stability of the support. The present embodiment, however, can achieve stable support since the fixing position of the battery stack 30 locates closer to the centerline CL and a deviation of a center of gravity balance of the battery stack 30 is not noticeable.

Specific shape and the like have been described in accordance with particular configuration depicted in the drawings, however, configuration which can yield the similar result are not limited to the above structure. Supporting member may be any member that has a fixing portion to be attached to the battery cover and a mounting portion to which a part of the battery stack is connected. In the example of Fig. 5, mounting surfaces 45b, 46b are located near the middle between the bottom surface and the centerline CL of the battery cover 56, however, it can be changed freely. It may be located at a position closer to the centerline CL (including on the line CL), or, may be located a position away from the central line CL. Supporting member is not necessarily the same as the other member.

### (Heat dissipation structure)

Heat dissipation of the storage battery unit 10 will be described. In this embodiment, one side of the battery module 20 of the battery stack 30 is in thermally contact with an inner surface of the battery cover 51 and the other side is in thermally contact with the inner surface of the battery cover 56 as shown in Fig.1 and Fig. 5. Specifically, the battery module 20 and the battery covers 51, 56 are in thermally contact with each other via heat conductive sheets 61, 62. It is noted that one of or both of the heat conductive sheets may be omitted.

Referring further to Fig. 4, the heat conductive sheet 61 is disposed on a longer side surface 24 of the battery module 20 in the present embodiment. One heat conductive sheet 61 may be disposed on the side surface 24 of the battery module 20. Alternatively, two, three or more sheets may be disposed.

The heat conductive sheet is not limited to particular material as long as it can transmit heat from the battery module 20 to other members outside effectively. By way of example, heat conductivity may be 1.0 (W • m⁻¹ • K⁻¹) or more, or 10 (W • m⁻¹ • K⁻¹) or more. With respect to a shape, elastic sheet material with a certain thickness (e.g. range of 0.5 mm to 3.0 mm) may be used. For example, its outer shape may be a rectangle, a parallelogram, a trapezoid, a circle, an ellipse, an oval and the like. One or both surfaces of the heat conductive sheet may be adhesive. The heat conductive sheet may be flame retardant. The heat conductive sheet may adhere to one or both of side surfaces of the battery module and inner side of the housing. The heat conductive sheet may be disposed in a compressed state.

Ratio of the heat conductive sheet(s) to a side surface of the battery assembly may be 50% or more, 60% or more, 70% or more, 80% or more, 90% or more, or 95% or more. Ratio of the heat conductive sheet(s) to a side surface of the battery module (flat portion not including rounded portion if corner is rounded) may be 50% or more, 60% or more, 70% or more, 80% or more, 90% or more, or 95% or more.

The heat conductive sheets 61 may be attached directly to the battery module 20, but in this example, attached to a heat conductive plate 70 in Fig.4. The heat conductive plate 70 is made of a metal plate. The heat conductive plate 70 has a contact surface 71 which is interposed between main surfaces 22 of the adjacent battery modules 20 (only one of the battery module 20 shown in Fig. 4) and one or more extending portions 72 bending from one edge of the contact surface 71. In this embodiment, two extending portions 72 are provided and bent with respect to the contact surface 71.

Through holes 71h are formed at four corners of the flat portion 71. The heat conductive plate 70 is configured to be supported between the battery modules 20 by securing fixing rods inserted into the through holes 71h.

As schematically shown in Fig. 8, when assembled, the contact surface 71 of the heat conductive plate 70 is in contact with the main surfaces of the two battery modules 20, whereas the extending portions 72 are in contact with side surface of the battery module 20. Then, the heat conductive sheet 61 is interposed between outer surface of the extending portion 72 and the battery cover 51.

The heat conductive sheet 61 is not limited to particular material as long as it can effectively transmit heat from the battery module 20 to other external member. By way of example, elastic sheet with a certain heat conductivity and thickness may be used.

According to the above-mentioned configuration, heat generated in the battery module 20 is transmitted to the battery cover 51 via the heat conductive plate 70 and heat conductive sheet 61, and then it is radiated. Fig. 1 does not show the detail, however, heat conductive sheet is preferably disposed on the other side of the battery module 20 (lower side surface in Fig. 1). In Fig. 5, a heat conductive sheet 62 is schematically shown.

Heat conductive sheets 61 are disposed on side surfaces of the battery modules 20 respectively. However, heat conductive sheet 62 may be disposed on side surfaces of a plurality of the battery modules 20 (for example, one sheet for four battery modules or for eight battery modules). In this case, the heat conductive sheet may be directly contact with side surfaces of the battery module 20 without using the heat conductive plate 70 of Fig. 4. Alternatively, separated heat conductive sheets 62 similar to the thermal conductive sheet 61 may be used.

### (Installation of storage battery units)

Orientation of the storage battery unit 10 in use is not limited particularly, but it can be used in any orientation. The storage battery unit is supported on the frame 80 in vertical direction (an orientation in which the battery covers 51, 56 are arranged in lateral direction rather than the vertical direction) in the present embodiment as shown in Fig. 2.

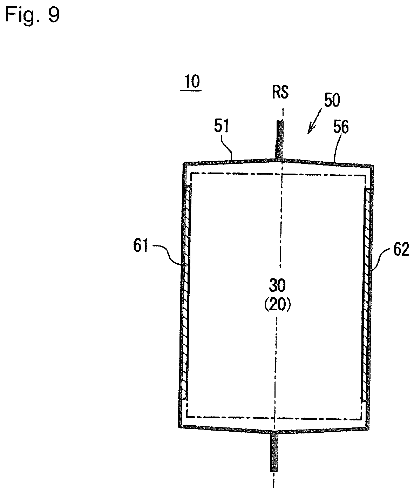

In this case, side surfaces of the battery module 20 are in thermally contact with battery covers 51, 56 as schematically shown in Fig. 9. In other words, thermal contact areas between the battery module 20 and the battery covers 51, 56 are located on the right and left sides of the storage battery unit 10 in use orientation. The configuration as above, depending on a positional relationship of equipment around the storage battery unit 10, enables air to smoothly flow compared with a configuration in which thermal contact position is located at the upper side and/or lower side, resulting in a good radiation effect.

The configuration in which either of the heat conductive sheets 61, 62 is disposed only on one side rather than both sides of the battery module 20 can also yield the similar effect to the above mentioned case. In addition, the battery module 20 may directly contact with the battery cover 51 or the battery cover 56 without using the heat conductive sheet 61, 62. When focusing on the heat dissipation effect by side arrangement of the thermal contact portion, it is noted that a person skilled in the art can understand that shape of the closed housing is not limited to particular shape as long as the thermal contact location is provided at such a location of the storage battery unit. Therefore, not only the battery cover formed by deep drawing as shown in Fig. 1, but a battery cover formed by welding or the like can also be used.

### (Mounting of frame and module)

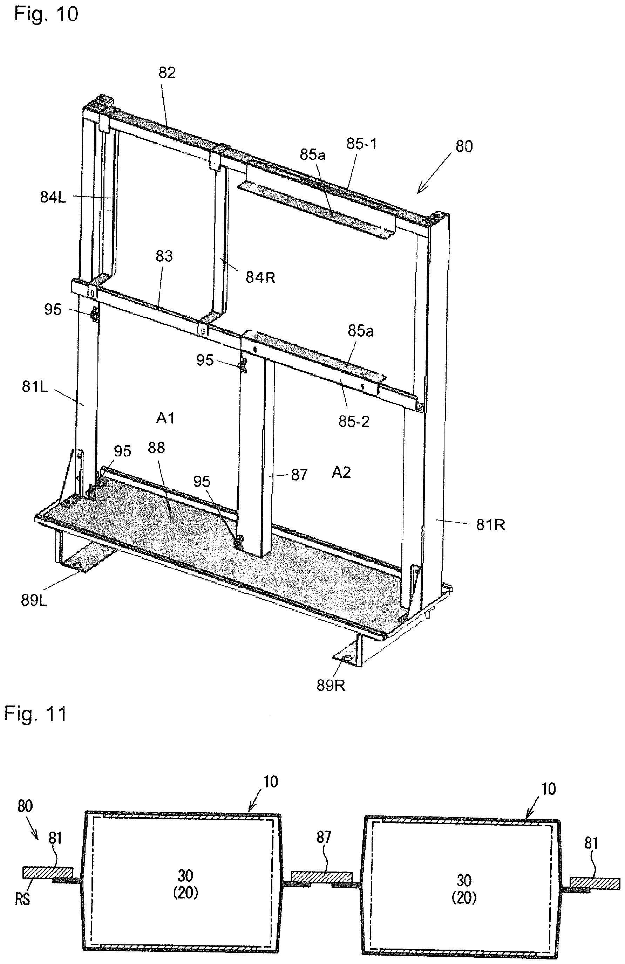

A frame 80 for supporting the storage battery units 10 and the junction box 91 and the like (see Figs. 2 and 10) will be described. Fig. 2 and Fig. 10 show partly different frames 80, however, it is not essential difference and each configuration may be used. All members constituting the frame 80 may be made of metal.

As shown in Fig. 10, the frame 80 has a base plate 88, supporting columns 81 L, 81 R disposed vertically at both ends of the base plate 88, and lateral frame members 82, 83 spanning between the supporting columns 81L, 81R. The frame 80 provides an upper mounting space and a lower mounting space.

Leg portions 89L, 89R are provided on the left side and right side of the under surface of the base plate 88. Each leg portion 89L, 89R may be a metal plate folded. The leg portions 89L, 89R may have one or more through holes into which a fixing screw is inserted.

A partition member 87 is disposed vertically between two supporting columns 81L, 81R for providing spaces A1, A2 in which the storage battery units 10 (see Fig. 1 and Fig. 2) are disposed respectively. The spaces A1 are A2 arranged side by side in this configuration.

The storage battery unit 10 may be secured to the frame 80 by using mechanical fixtures such as fastening bolts or rivets, for example, but not limited thereto. The flange portion 51f of the storage battery unit 10 may be fixed to a part of the frame 80 (for example, to one of posts 81 L, 81 R, and a center partition member 87).

It is preferable that the fixture is configured to fix the module 10 so that it can be detached. For example, a mounting member 95 may be used, the mounting member 95 has a mounting surface apart from a side surface of the partition member 87 by a predetermined distance. In this case, even if an outer edge of the flange portion 51 f of the battery cover 51 is not straight but a curved portion 51 e as shown in Fig. 5, the flange portion of the storage battery unit 10 can be properly attached to frame 80. The number of mounting members 95 for fixing one storage battery unit 10 may be, but not limited to, four in this example.

In addition to fixtures such as fixing bolts and rivets, fixing device such as a snap fit fixture, which does not need a tool, and the module 10 will be fixed when the module 10 has been moved with respect to the frame 80 to a predetermined position may be used, for example.

Fig. 11 is a transverse sectional view schematically showing a state in which the storage battery unit 10 is attached to the frame 80. According to the configuration of the present embodiment, a storage battery unit 10, as shown in Fig. 5, is configured as a sealed housing 50 made of a substantially symmetrical shape with respect to the center line CL. Therefore, in a state where the flange portion 51 f and the like of the storage battery unit 10 is mounted to the frame 80, a displacement (referring to a vertical direction in Fig. 11) of the center of gravity of storage battery unit 10 and the mounting reference surface RS is reduced as shown in Fig. 11, as a result the storage battery unit 10 can be supported in a good balance of center of gravity.

As schematically shown in Fig. 11, it is also preferable that both the flange portions of one storage battery unit 10 the other storage battery unit 10 are fixed to the center partition member 87. In this case, since the partition member 87 functions as a common holding member for two modules, advantageously it is possible to simplify the configuration and to reduce of manufacturing cost.

In the upper left space of the frame 80, two bracket members 84L and 84R span a upper and a lower lateral frame members 82, 83 along vertical direction. Each of bracket member 84L and 84R is formed in a substantially U-shape as a whole. The junction box 91 is to be mounted thereto.

In the upper right space of the frame 80, holding plates 85-1, 85-2 are fixed to each of lateral frame members 82, 83. Both holding plates 85-1, 85-2 have a horizontal surface 85a extending opposite directions respectively, particularly in one example, the horizontal surface 85a of the holding plate 85-1 extends towards the front side, while the horizontal surface 85a of the holding plate 85-2 of the bottom extends towards the back side. The PCS unit 92 is to be mounted between the upper and lower holding plates 85-1, 85-2.

As a result, as shown in Fig. 2, in the present embodiment, the storage battery units 10 are installed in lower position of the frame side by side, and junction box 91 and the PCS unit 92 are installed in upper position of the frame side by side.

If a storage battery unit 10 is positioned above the PCS unit 92 and the like, the storage battery unit is likely to suffer from heat when the heat amount of the PCS unit 92 is large. However, according to the configuration of Fig. 2, since the storage battery unit 10 is positioned lower place, advantageously such a problem is less likely to occur.

In addition, as illustrated in Fig. 3, a housing 110 including a housing body 111 configured to cover the whole frame 80 and covers 112, 113 provided on front side each of which are detachable can yield the following advantages. That is, for example, it is possible to access to the PCS unit 92 and the like by just opening the upper cover 112 if repair or modification for the upper PCS unit 92 required. Or, it is possible to directly access to the storage battery unit 10 by just opening the lower cover 113 and the like directly if repair or modification for lower storage battery unit 10 required.

In a configuration storage in which storage battery units 10 are disposed along front-rear direction, if user wishes to access to the rear side module 10, then the front side module 10 may obstruct an access from front side as above or causes the module to be detached. However, according to the lateral arrangement as shown in Fig.2, use can access directly to the respective module 10, which is convenient.

### (Other embodiments of the storage battery units)

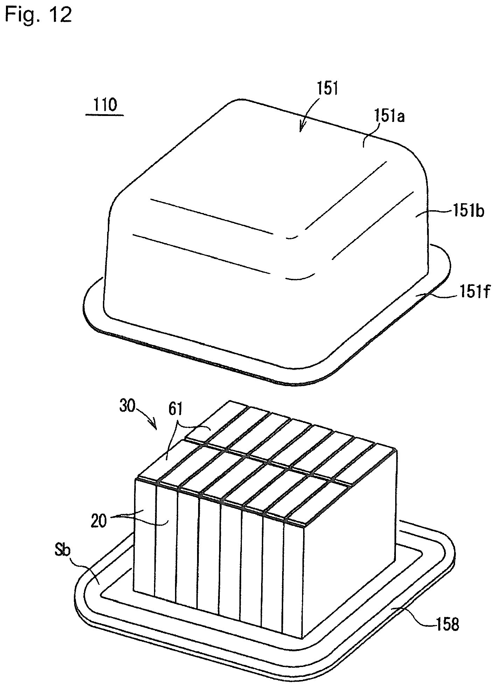

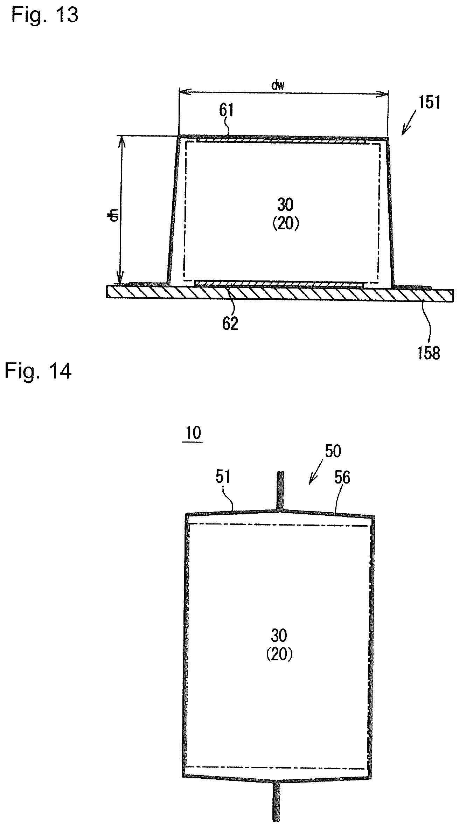

Although embodiments of the present invention have been described, a storage battery unit of the present invention may be a configuration as shown in Fig. 12 and Fig. 13.

The storage battery unit 110 includes a base plate 158 on which a battery stack 30 is disposed and a battery cover 151 having a shape to cover the entire of battery stack 158. Battery stack 30 is depicted schematically but it may be substantially the same as that of Fig. 1.

However, if the battery stack 30 as shown in Fig. 1 is used, extending portions 31 a, 32a (portion where the fixing screw is attached) of the end plates 31 and 32 may be moved to lower position, so that these portions can be fixed to the base plate 158.

Battery cover 151 is formed of a metal plate by press working, similarly to the embodiment as mentioned above. It has a substantially square cover surface 151a, four side surfaces extending downwardly from a periphery of the cover surface 151a, and a flange portion 151f formed at ends of the side surfaces. The battery cover 151 may have an aspect ratio (dw: dh), for example, in a range of about 1: 0.3 to 1:4, by way of example, 2:3.

Fixing screws, rivets, welding or the like can be used for fixing the flange portion 151f of the battery cover 151 to the base plate 158, for example. As schematically shown in Fig. 13, a sealing member 158 may be disposed between the flange portion 151f and the base plate 158. Various seal may be used for the searing member 158. In one example, it may be a gasket surrounding the battery stack 30, corresponding to the shape of the flange portion 151f.

Base plate 158 may be a metal plate, for example. Materials of the base plate 158 and the battery cover may be the same or different. Outer shape of the base plate 158 may be the same square shape as that of the flange portion 151f. Or, it may be slightly larger than the flange portion 151 f.

In this configuration, it is preferred that a part of the battery stack 30 is in thermally contact with a portion of the metal cover 151 so as to provide heat dissipation mechanism as shown in Fig 14. In this example, one surface (upper surface) of the battery stack 30 is in thermally contact with the inside of the upper surface of the battery cover 151 via the heat conductive sheet 61. The other surface (lower surface) of the battery stack 30 is thermally contact with the base plate 158 via the heat conductive sheet 62. Although the heat conductive sheets 61, 62 may be of any shape, but in this example, heat conductive sheets 61 are disposed on a surface (upper surface) of the battery module 20 respectively as shown in Fig. 13. Although detailed illustration is omitted, in this case, a heat conductive plate 70 as shown in Fig. 4 may be disposed between the battery modules 20. With respect to the heat conductive sheet 62, it may have the same structure as that of the heat conductive sheet 61 of the upper surface. Alternatively, common one larger heat conductive sheet for a plurality of battery modules 20 or two or more heat conductive sheets can be used.

### (Configuration with no heat conductive sheet)

As mentioned above, in one embodiment of the present invention, heat conductive sheet is not essential component. However, as shown in Fig. 13, a side surface of the battery stack 30 or a side surface of the battery module 20 may be in thermally contact with the inner surface of the cover without using a thermally conductive sheet. In the above embodiment, a configuration using heat conductive sheet for improving heat radiation performance has been described, but as long as meeting a requirement for heat radiation performance, it is possible to omit a part of or all of the heat conductive sheet. Further, in a configuration with no heat conductive sheet, the battery stack or the battery module may be in physically contact with the metal cover, or , may be apart from the metal cover as long as long as it is in thermally contact. Such a configuration can yield the heat radiation property by the metal cover formed of single member.

Embodiments of the present invention have been described referring to the drawings. The present invention is not limited to those described above but various modifications are available:
(a) With respect to the battery covers 51, 56 and the like, covers having cup portion of substantially rectangular bottom shape have been described, but shape of the bottom surface may be circular, oval, polygonal or combinations of two or more thereof.
(b) In the above, battery covers whose bottom surface of recess portion may be flat or convexo-concave formed thereon, however, a bottom surface may have two or more surfaces with different heights respectively.
(C) With respect to the battery stack 30, a battery stack in which eight battery modules are partitioned by four by means of one partition plate 32. However, for example, twelve battery modules 20 can be partitioned by four by means of two partition plates.

### (SUPPLIMENTALY NOTE)

The present application discloses the following inventions:
1. A storage battery unit (10), comprising:
   a battery stack (30) in which a plurality of battery modules (20) are stacked; and
   a housing (50) for accommodating the battery stack;
   wherein the housing (50) comprises a battery cover (51) for covering at least a part of the battery stack, the battery cover including a seamless cup portion (51 a, 51b), and wherein the battery cover (51) is in thermally contact with the battery stack (30).
2. The storage battery unit as mentioned above, wherein the housing accommodates the battery stack in sealed state.
3. The storage battery unit as mentioned above, wherein the battery modules has a flat substantially rectangular parallelepiped outer shape including two main surfaces (22) and side surfaces (23, 24) connecting the main surfaces, and wherein the side surface of the battery module is in thermally contact with the battery cover.
4. The storage battery unit as mentioned above, wherein a heat conductive member (61) is disposed between the battery module and the battery cover.
5. The storage battery unit as mentioned above, wherein the cup portion of the battery cover comprises a bottom surface (51a) and four side surfaces (51b) adjacent to the bottom surface, and wherein a connecting portion between the bottom surface and the side surface, and , a connecting portion between the side surfaces are rounded.
6. The storage battery unit as mentioned above, wherein curvature radius of the rounded portion is 30mm or more.
7. The storage battery unit as mentioned above, wherein the battery cover (S1) is formed by press working.
8. The storage battery unit as mentioned above, wherein the battery cover (51) is regarded as a first battery cover, the storage battery unit further comprising a second battery cover (56) configured to co-operate with the first battery cover to form the housing.
9. The storage battery unit as mentioned above, wherein the outer shapes of the first and second battery covers are substantially the same.
10. The storage battery unit as mentioned above, further comprising a base plate (158) configured to co-operate with the battery cover (151) to form the sealed housing.
11. A storage battery apparatus (1), comprising at least one storage battery unit as mentioned above.

### REFERENCE NUMERAL LIST

- 1: STORAGE BATTERY APPARATUS
- 10, 110: STORAGE BATTERY UNIT
- 20: BATTERY MODULE
- 21: HOUSING CASE
- 22: MAIN SURFACE
- 23,24: SIDE SURFACE
- 25a, 25b: TERMINAL
- 27: PLASTIC CASE
- 28: COVER
- 30: BATTERY STACK
- 31: END PLATE
- 32: PARTITION PLATE
- 37,38 45, 46: SUPPORTING MEMBER
- 50: SEALED HOUSING
- 51, 56: BATTERY COVER
- 51a: COVER SURFACE
- 51b: SIDE SURFACE
- 51f: FLANGE PORTION
- 61, 62: HEAT CONDUCTIVE SHEET
- 70: HEAT CONDUCTIVE PLATE
- 71: CONTACT SURFACE
- 72: EXTENDING PORTION
- 80: FRAME
- 81L, 81R: SUPPURTING BAR
- 82, 83: LATERALL FRAME MEMBER
- 87: PARTITION MEMBER
- 88: BASE PLATE
- 89L, 89R: LEG PORTION
- 91: JUNCTION BOX
- 92: PCS UNIT
- 110: HOUSING
- 111: HOUSING BODY
- 112: UPPER COVER
- 113: LOWER COVER
- 158: BASE PLATE
- SA: SEAL MEMBER

## Claims

1. A storage battery unit, comprising:
a battery stack in which a plurality of battery modules are stacked; and
a housing for accommodating the battery stack;
wherein the housing comprises a battery cover for covering at least a part of the battery stack, the battery cover including a seamless cup portion, and wherein the battery cover is in thermally contact with the battery stack.

2. The storage battery unit according to claim 1, wherein the housing accommodates the battery stack in sealed state.

3. The storage battery unit according to claim 1 or 2, wherein the battery modules has a flat substantially rectangular parallelepiped outer shape including two main surfaces and side surfaces connecting the main surfaces, and wherein the side surface of the battery module is in thermally contact with the battery cover.

4. The storage battery unit according to any one of claims 1 to 3, wherein a heat conductive member is disposed between the battery module and the battery cover.

5. The storage battery unit according to any one of claims 1 to 4, wherein the cup portion of the battery cover comprises a bottom surface and four side surfaces adjacent to the bottom surface, and wherein a connecting portion between the bottom surface and the side surface, and , a connecting portion between the side surfaces are rounded.

6. The storage battery unit according to claim 5, wherein curvature radius of the rounded portion is 30mm or more.

7. The storage battery unit according to any one of claims 1 to 6, wherein the battery cover is formed by press working.

8. The storage battery unit according to any one of claims 1 to 7, wherein the battery cover is regarded as a first battery cover, the storage battery unit further comprising a second battery cover configured to co-operate with the first battery cover to form the housing.

9. The storage battery unit according to claim 7, wherein the outer shapes of the first and second battery covers are substantially the same.

10. The storage battery unit according to any one of claims 1 to 7, further comprising a base plate configured to co-operate with the battery cover to form the sealed housing.

11. A storage battery apparatus, comprising at least one storage battery unit according to any one of claims 1 to 10.
